(19) 

Europäisches Patentamt  
European Patent Office  
Office européen des brevets

(11) **EP 1 325 792 B1**

(12) **EUROPEAN PATENT SPECIFICATION**

(45) Date of publication and mention  
of the grant of the patent:  
**16.02.2011  Bulletin 2011/07**

(51) Int Cl.:  
***B23F 15/06*** (2006.01)

(21) Application number: **02075010.5**

(22) Date of filing: **08.01.2002**

(54) **Tool and method for precision grinding of conical face gears**

Werkzeug und Verfahren zum Präzisionsschleifen eines konischen Kronrades das in ein evolventförmiges Kegelritzel eingreift

Outil et procédé de meulage de précision d'un engrenage conique plat qui engrene avec un pignon conique à developpante

(84) Designated Contracting States:  
**AT BE CH CY DE DK ES FI FR GB GR IE IT LI LU MC NL PT SE TR**

(43) Date of publication of application:  
**09.07.2003  Bulletin 2003/28**

(73) Proprietor: **The Boeing Company**  
**St. Louis,**  
**Missouri 63166-0516 (US)**

(72) Inventor: **Tan, Jie**  
**Draper, UT 84020 (US)**

(74) Representative: **Land, Addick Adrianus Gosling et al**  
**Arnold & Siedsma**  
**Sweelinckplein 1**  
**2517 GK Den Haag (NL)**

(56) References cited:  
**WO-A-98/02268     US-A- 5 494 475**  
**US-A- 5 941 124**

Printed by Jouve, 75001 PARIS (FR)

**Description**

<u>TECHNICAL FIELD</u>

The present invention relates generally to the manufacture of conical face gears and more particularly to a method and apparatus for continuous generation grinding of conical face gears using a worm-shaped grinding wheel and a dressing tool for use on the worm-shaped wheel.

<u>BACKGROUND OF THE INVENTION</u>

<u>BACKGROUND ART</u>

Conical face gearing is a fairly recent innovation and consists of a conical involute gear, which serves as the pinion member, and a mating face gear that meshes with the conical involute pinion and satisfies true conjugate action. Conical face gearing offers gear train designers an alternative to spiral bevel gears in large shaft-angle, large reduction ratio angular power transmission applications. Conical face gearing possesses numerous unique features which provide solutions to special applications, such as the adjustment of backlash between a conical involute pinion and a conical face gear without affecting the tooth contact pattern and the conjugate action between the pinion and the conical face gear.

Despite their apparent advantages, conical face gears are not in widespread use, primarily because manufacturing methods for this type of gearing, especially production Suitable methods, have heretofore not been developed. Several of the known processes for generating face gears are not readily suitable for the production manufacture of conical face gears. One such process is disclosed in U.S. Patent No. 5,494,475 entitled "Tool for Producing Crown Wheels and Method for Producing Such a Tool", the disclosure of which is hereby incorporated by reference as if fully set forth herein. One disadvantage of this process concerns the geometry of the threaded tool that is employed to form the crown wheel; the '475 patent defines the threaded tool in a manner such that it has a true involute profile in the normal planar section of the thread. As such, crown wheels formed in this manner are inaccurate due to toe-heel effects that are well known in the industry and are thus unsuitable for demanding applications (e.g., aerospace applications).

Another disadvantage of the '475 patent concerns the concept of using a series of racks, each of which having a pressure angle from about 5 degrees to about 45 degrees and representing a thin cylindrical layer of the crown wheel. It is well known in the art that standard industrial gears typically have a whole tooth height equal to about 2.25 divided by the diametrical pitch. As such, gear generating tools are required to have a whole tooth height equal to about 2.5 divided by the diametrical pitch to provide the generated gear with sufficient operational clearance to permit meshing engagement with another gear. A rack having a pressure angle of about 40 degrees, however, can have a maximum height of only about 1.872 divided by the diametrical pitch. Accordingly, there are situations in which the rack cannot be used as a generating tool to form a gear or a gear cutting tool that conforms to industry standard tooth heights.

A final concern with the '475 patent concerns the manner in which a dressing tool is moved in a two-dimensional manner tangentially across the width of the threaded tool. Feeding the dressing tool in this manner will result in interference between the dressing tool and the adjacent tooth when the pressure angle is greater than about 35 degrees. This dressing method is unsuitable for the production of conical face gears having a relatively high degree of accuracy since the cone angle (and possibly a skew angle) in the pinion must be dealt with in three-dimensional space.

Another gear forming method that is specifically designed for conical face gearing is disclosed in commonly assigned U.S. Patent No. 5,941,124 entitled "Face Gearing With Conical Involute Pinion", the disclosure of which is hereby incorporated by reference as if fully set forth herein. This method utilizes a formed wheel that emulates the action of one tooth of the pinion that is in meshing engagement with the conical face gear. The single-tooth action and the need to make multiple machining passes in forming a single tooth in the conical face gear renders this process extremely slow such that it is not well suited for volume production.

Accordingly, there is a need in the art for a tool and a method for forming a conical face gear which permits highly accurate gears to be produced at a relatively high rate of production.

<u>SUMMARY OF THE INVENTION</u>

In one preferred form, the present invention provides a method for dressing a grinding worm that is to be used in forming a conical face gear that meshingly engages a conical involute pinion. The method employs a theoretical conical involute pinion as a reference to orient a dressing tool relative to the grinding worm at an initial position and to control the movement of the dressing tool relative to the grinding worm. A plurality of straight generators that define a reference tooth on the theoretical conical involute pinion and the concept of true conjugate action between the theoretical conical involute pinion and the grinding worm are employed to define a plurality of dressing tool paths that are employed to position and move the dressing tool to form one or more threads in the grinding worm.

In another preferred form, a method for forming a conical face gear that meshingly engages a conical involute pinion is provided. The method employs a theoretical conical involute pinion as a reference for positioning the grinding worm. True conjugate action between the conical face gear and the theoretical conical involute pinion and true conjugate action between the theoretical conical involute pinion and the grinding worm is employed to determine an initial position of a grinding worm relative to the conical face gear and to establish a feed direction for translating the grinding worm across the conical face gear.

A precision grinding apparatus for dressing a grinding worm and forming a conical face gear is also provided.

The conical face gear 12 is preferably pre-formed and hardened in a heat-treatment operation, such as carburizing or nitriding, and includes excess stock that will be removed in a finishing operation performed by the precision grinding apparatus 10. As those skilled in the art will understand, excess stock is necessary to permit the distortions that occur during the heat treatment of the conical face gear 12 to be satisfactorily attenuated or eliminated.

In the presently preferred embodiment, the grinding worm 14 is formed from an abrasive-medium type material, such as aluminum oxide, a dressable CBN-type or other types of material that are conventionally used in the manufacture of other types of gears. The grinding worm 14 rotates about a grinding worm z-axis $Z_w$ with a grinding worm angular velocity $\omega_w$. In synchronization with the rotation of grinding worm 14, the conical face gear 12 rotates about the conical face gear axis $Z_g$ with a face gear angular velocity of $\omega_g$.

In the particular example provided, a plurality of grinding worm teeth 40 that are formed by a single spiral thread 41 contact the conical face gear 12 when the conical face gear 12 and the grinding worm 14 are synchronously rotating, with each of the grinding worm teeth 40 passing between a pair of the face gear teeth 20. A single, spiral gap 42 that results from the single thread 41 runs along the outer perimeter of the grinding worm 14 between the grinding worm teeth 40. The spiral gap 42 serves to process the grinding worm 14 over the various face gear teeth 20. Specifically, as the conical face gear 12 and grinding worm 14 synchronously rotate with rotational velocities of $\omega_g$ and $\omega_w$, respectively, a given face gear tooth 20 enters the spiral gap 42 and travels within the spiral gap 42 for several rotations of the grinding worm 14, until the given face gear tooth 20 exits the spiral gap 42. The spiral gap 42 begins at one end of the grinding worm 14 and ends at the opposite end of the grinding worm 14. Those skilled in the art will understand that the plurality of grinding worm teeth 40 may alternately be formed by a plurality of threads or spiral gaps 42 that are formed into the grinding worm 14.

In the presently preferred embodiment, the grinding worm 14 not only rotates about axis $Z_w$ synchronously with the rotation of the conical face gear 12, but also moves radially over the conical face gear 12, with the motion being termed "feed motion". The feed motion preferably causes the grinding worm to move radially from the outer end of the face gear teeth 20 to the inner end of the face gear teeth 20 to thereby ensure that the whole face width of the face gear teeth 20 is precisely ground by the grinding worm 14. In the presently preferred embodiment, the grinding worm moves in the radial direction at a predetermined feed rate (i.e., feed amount per revolution of the conical face gear 12) that is designed to satisfy the accuracy requirements for the finished face gear teeth 20. The direction of the feed motion is determined by the orientation of the teeth 24 of the conical involute pinion 30. Those skilled in the art will understand that the feed motion may be reversed (i.e., from the inner end to the outer end of the face gear teeth 20) as may deemed more appropriate in certain situations.

BRIEF DESCRIPTION OF THE DRAWINGS

Additional advantages and features of the present invention will become apparent from the subsequent description and the appended claims, taken in conjunction with the accompanying drawings, wherein:

Figure 1A is a perspective view of a precision grinding apparatus having a conical face gear and a grinding worm, the precision grinding apparatus being shown with a theoretical conical involute pinion that has been superimposed onto the conical face gear and the grinding worm;

Figure 1B is a top view of the precision grinding apparatus of Figure 1A;

Figure 2A is a side elevation view of the precision grinding apparatus of Figure 1A, with a dressing tool being shown superimposed to the conical face gear, the grinding worm and the theoretical conical involute pinion;

Figure 2B is an enlarged view of a portion of Figure 2A;

Figure 2C is an enlarged portion of Figure 2B illustrating the positioning of the dressing tool against the flank of a reference tooth of the theoretical conical involute pinion;

Figure 3 is a perspective view of the theoretical conical involute pinion;

Figure 4 is a perspective view of the dressing tool;

Figure 5A is a perspective view of the precision grinding apparatus of Figure 1A, illustrating several geometric references that are employed in the dressing of the grinding worm and grinding of the conical face gear;

Figure 5B is a bottom view of the grinding worm illustrated in Figure 1A, illustrating several geometric references that are employed in the dressing of the grinding worm and grinding of the conical face gear;

Figure 6 is a perspective view of a multi-axis CNC grinding machine for carrying out the methods of the present invention.

<u>DETAILED DESCRIPTION OF THE PREFERRED EMBODIMENT</u>

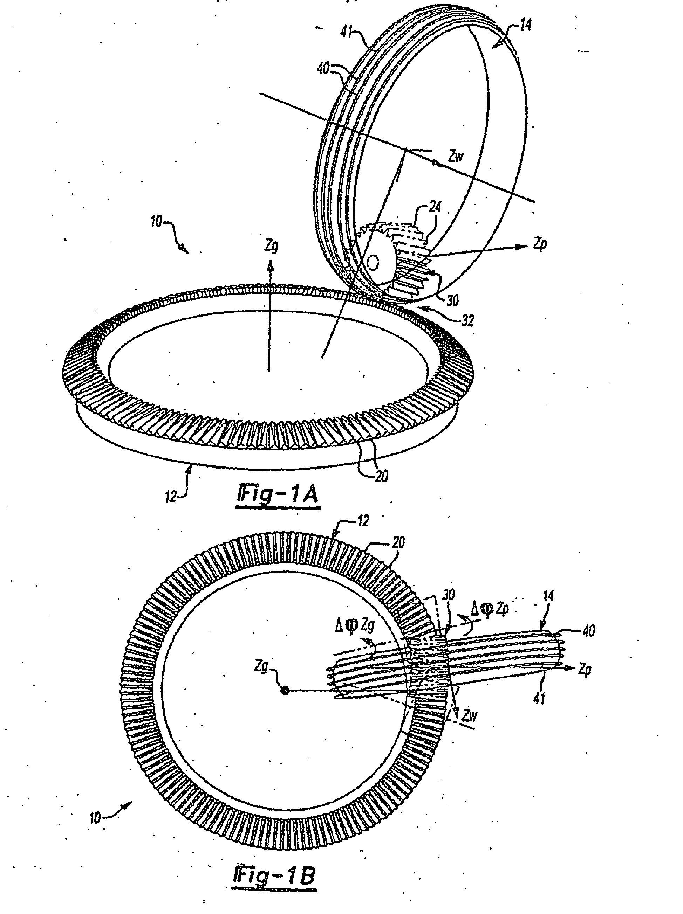

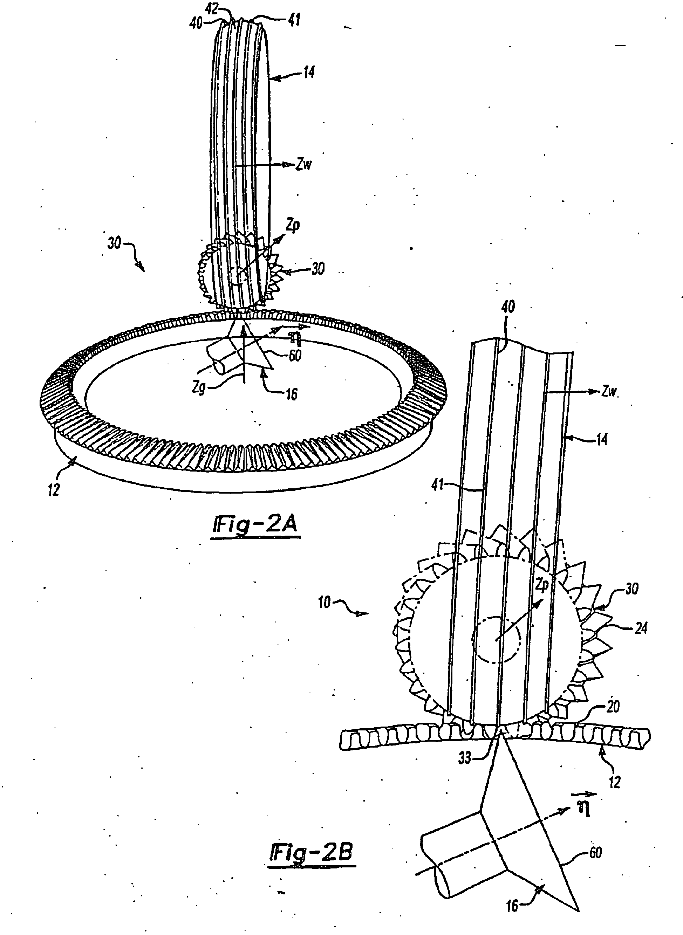

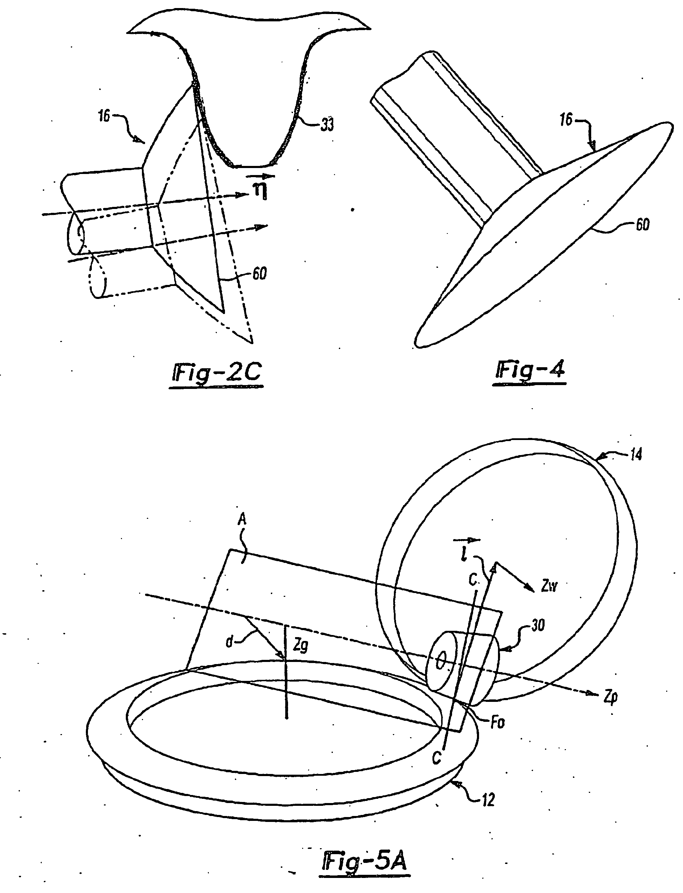

With reference to Figures 1A, 1B, 2A and 2B of the drawings, a precision grinding apparatus constructed and operated in accordance with the teachings of the present invention is generally indicated by reference numeral 10. Precision grinding apparatus 10 is shown to include a conical face gear 12, a grinding worm 14 and a dressing tool 16. The conical face gear 12 includes a plurality of teeth 20 that are adapted to meshingly engage a plurality of teeth 24 of a conical involute pinion 30. The pinion 30 and the conical face gear 12 constitute a conical face gear drive 32 in which the pinion 30 rotates about a pinion axis $Z_p$ and the conical face gear 12 rotates about a face gear axis $Z_g$. The conical involute pinion 30 is employed in the methodologies disclosed herein as a theoretical reference and as such, is referred to as being a "theoretical conical involute pinion" since it is not physically present. The theoretical conical involute pinion 30 is employed in the dressing and grinding processes disclosed herein as a reference for positioning the grinding worm 14 relative to the conical face gear 12 and for positioning the dressing tool 16 relative to the grinding worm 14.

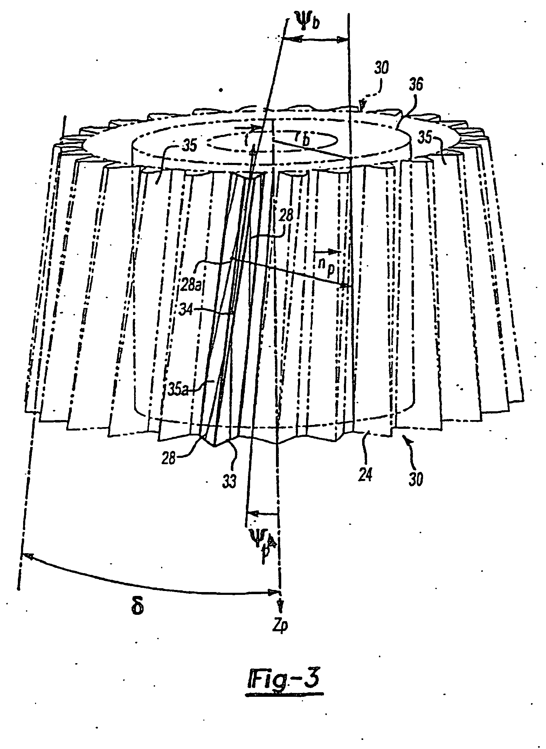

In Figure 3, the features of the conical involute pinion 30 are illustrated in detail. The orientation of the teeth 24 of the pinion 30 is determined by two design parameters: the skew angle $\psi_p$ and the half-cone angle $\delta$. For reference purposes, a vector designated by $\bar{t}$ is attached to and aligned with a reference tooth 33, with the vector $\bar{t}$ emanating from the mid-height location 34 of the reference tooth 33. The tooth flanks 35 of the conical involute pinion 30 are surfaces of an involute helicoid generated from a base cylinder. A series of straight generators 28 are located on the involute helicoid tooth surfaces, covering the whole of the tooth flanks 35. Along any given generator 28, the tooth surface normal vector $\bar{n}_p$ is tangent to the base cylinder 36 (a theoretical design parameter) from which the involute helicoid is generated.

In Figure 4, the preferred shape of the dressing tool 16 is illustrated to include a flat front surface 60 that is employed to form and maintain the thread profile of the grinding worm 14. With additional reference to Figures 2A and 2B, the positioning of the dressing tool 16 relative to the grinding worm teeth 40 is shown, along with the theoretical conical involute pinion 30 and the mating conical face gear 12 which serve as references for the initial positioning of the grinding worm 14 and the dressing tool 16. Those skilled in the art will understand that during the dressing operation, the theoretical conical involute pinion 30 and the conical face gear 12 are not physically present (i.e., not in meshing engagement with the grinding worm 14). Once the dressing tool 16 is placed in its initial position relative to the grinding worm 14, the grinding worm 14 is rotated about axis $Z_w$ while the dressing tool 16 is moved in a linear manner along a direction normal to the flat surface 60.

The dressing operation is performed in several operational passes, with each pass consisting of the steps of: determining an initial position of the dressing tool 16 and the grinding worm 14; positioning the dressing tool 16 and the grinding worm 14 at the initial position; synchronously moving the dressing tool 16 in a linear manner and rotating the grinding worm 14 so that the dressing tool 16 contacts the entire depth of the grinding worm thread 40; and withdrawing the dressing tool 16 from the grinding worm tooth 40. The next pass will employ a new initial position for the dressing tool 16 and a new direction of linear motion, but the new direction of linear motion is always normal to the flat surface 60, and the ratio of the angular velocity of the grinding worm 14 and the linear velocity of the dressing tool 16 remains constant throughout the dressing operation. Multiple dressing passes are necessary to form and/or dress the entire grinding worm tooth 40. In the particular example provided, the dressing operation is performed first on one side of the grinding worm 14 to generate a first side of the grinding worm tooth 40 and thereafter on a second side of the grinding worm 14 to generate the second side of the grinding worm tooth 40.

In Figure 5A, the installation of the grinding worm 14 is illustrated in side elevation. For purposes of discussion, several auxiliary geometric features that serve as references in specifying the position and/or motion of the grinding worm 14 and the dressing tool 16-are also shown.

A vector, designated by reference letter d, identifies the shortest distance between the rotational axis $Z_p$ of the pinion 30 and the rotational axis $Z_g$ of the conical face gear 12. A first plane, generally indicated by reference letter A, passes through the rotational axis $Z_p$ of the pinion 30 and is perpendicular to vector d. A line, designated as CC, is located on plane A and is perpendicular to the pinion axis $Z_p$. The pinion 30 is initially positioned such that the vector $\bar{t}$ that is attached to the reference tooth 33 and illustrated in Figure 3 intersects line CC at point $F_0$, located at the mid-point of the face width of the conical face gear 12. From point $F_0$ a vector, designated as vector $\bar{F}$, is generated in a manner such that it is aligned with the current orientation of vector $\bar{t}$. Generated in this manner, vector $\bar{F}$ is fixed in space and serves as a reference for installing or positioning the grinding worm 14 to the conical face gear 12 and as the feed direction for the feed motion of the grinding worm 14 across the face width of the face gear teeth 20.

The installation of the grinding worm 14 is determined by a vector $\bar{l}$ that is contained in plane A, emanating from point $F_0$ in a direction perpendicular to vector $\bar{F}$. The length of vector $\bar{l}$ is determined by the reference pitch diameter $(D_w)$ of the grinding worm 14, with the reference pitch diameter being the diameter of the circle that is offset from the outer diameter of the grinding worm 14 by the amount of addendum of the thread on the grinding worm, according to

equation (1):

$$| l | = (D_w / 2) \qquad (1)$$

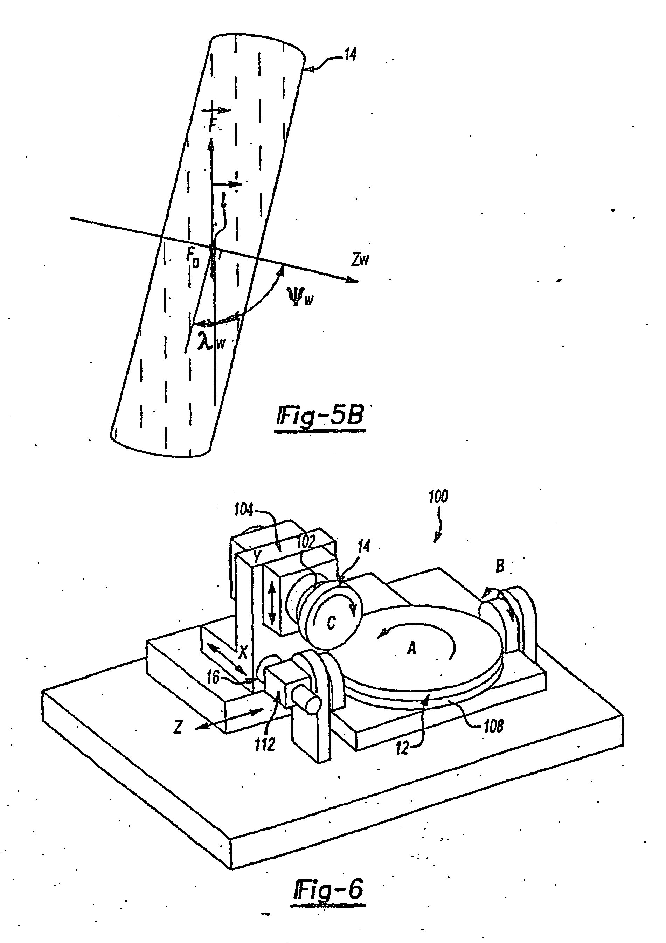

With additional reference to Figure 5B, the axis of rotation $Z_w$ of the grinding worm 14 is installed at the end of vector $\bar{l}$ such that it is perpendicular to vector $\bar{l}$ and the angle between the axis of rotation $Z_w$ of the grinding worm 14 and vector $\bar{F}$ is $\psi_w$. The angle $\psi_w$ is related to the lead angle $\lambda_w$ of the grinding worm 14 by equation (2):

$$\psi_w = 90° - \lambda_w \qquad (2)$$

Those skilled in the art will understand that in installing the grinding worm 14, the angle $\psi_w$ should be measured in proper orientation according to the hand-type (i.e., left or right hand) of the grinding worm 14. The lead angle $\lambda_w$ is determined by equation (3):

$$\lambda_w = \sin^{-1}\left(\frac{N_w}{D_w P_d}\right) \qquad (3)$$

where $N_w$ is the number of threads 41 on the grinding worm 14, $D_w$ is the reference pitch diameter of the grinding worm 14 and $P_d$ is the diametrical pitch of the conical face gear set (i.e., the conical face gear 12 and the pinion 30).
With the grinding worm installation given above, the generation of the conical face gear 12 is carried out with two motions of the grinding worm 14 relative to the conical face gear 12. The first motion is synchronous rotation of both the grinding worm 14 and the conical face gear 12 about their respective axes of rotation $Z_w$ and $Z_g$. The angular velocities of the grinding worm 14 and the conical face gear 12 are related as provided in equation (4):

$$\frac{\omega_g}{\omega_w} = \frac{N_w}{N_g} \qquad (4)$$

where $\omega_g$ is the angular velocity of the conical face gear 12, $\omega_w$ is the angular velocity of the grinding worm and $N_g$ is the number of teeth 20 on the conical face gear 12. As the conical face gear 12 and grinding worm 14 rotate synchronously, the motion in which the grinding worm 14 is fed across the face width of the face gear teeth 20 proceeds along the feed direction (as defined by vector $\bar{F}$), preferably starting from the outer end of the conical face gear 12 and moving towards the inner end of the face gear teeth 20. As noted above, this motion may also be reversed if deemed appropriate under certain conditions. The magnitude of the feed motion, or the amount of movement along the vector $\bar{F}$ per revolution of the conical face gear 12, is determined by a predetermined set of accuracy requirements for the face gear teeth 20 that are being ground. Those skilled in the art will readily understand how to control the magnitude of the feed motion so as to satisfy set of accuracy requirements and as such, this need not be discussed in more detail.
The profile of the grinding worm teeth 40 is formed and maintained by the dressing tool 16, with the flat surface 60 being made of an appropriate material such as diamond grit that is implanted in a bounding base material. Referring back to Figures 2A and 2B, the dressing tool 16 is illustrated as being located in the spiral gap 42, with the dressing tool 16 and the grinding worm 14 being oriented in a first initial position relative to the conical face gear 12. The initial reference position of the grinding worm 14 is determined by using pinion 30 as a reference as described above. The position of the flat surface 60 of the dressing tool 16 and the synchronous motion of the dressing tool 16 and grinding worm 14 are detailed by the following procedure, wherein the conical face gear 12 is used as a stationary, theoretical reference and is not physically present (i.e., not contacting the grinding worm 14) during the dressing operation:

a) Referring to Figure 3, the vector $\bar{l}$ is aligned with the orientation of the reference tooth 33 and attached thereto at the mid-height of the reference tooth 33 as discussed above.

b) Referring to Figures 5A and 5B, superimposing the theoretical conical involute pinion 30 to the conical face gear 12 and the grinding worm 14 in the manner discussed above and thereafter establishing point $F_0$ and vector $\vec{F}$.

c) Referring to Figures 2A, 2B and 3, locating a straight generator 28a on one of the flanks 35a of the reference tooth 33 and placing the flat surface 60 of the dressing tool 16 in tangent contact with the flank 35a of the reference tooth 33 along the straight generator 28a such that the normal $\vec{n}$ of the flat surface 60 is aligned with the normal $\vec{n}_p$ of the reference tooth 33 at the given generator 28a.

d) Referring to Figures 1B and 2A through 2C, rolling the theoretical conical involute pinion 30 over the conical face gear 12, which is assumed to be fixed at this stage, such that the pinion teeth 24 maintain tangent contact the face gear teeth 20 and the theoretical conical involute pinion 30 and the conical face gear 12 obey true conjugate action. This rotation causes the rotational axis Zp of the theoretical conical involute pinion 30 to rotate about the rotational axis $Z_g$ of the conical face gear 12, with the amount of rotation being equal to an angle $\Delta\varphi_{Zg}$ that is obtained from the mathematical condition detailed in the vectorial scalar product equation (5):

$$\vec{n} \cdot \vec{F} = 0. \tag{5}$$

As those skilled in the art will understand, the solution of the angle $\Delta\varphi_{Zg}$ is a simple mathematical problem since the rotational axis $Z_g$ of the conical face gear 12, the (nominal) rotational axis Zp of the theoretical conical involute pinion 30, the feed direction vector $\vec{F}$ and the surface normal $\vec{n}_p$ of the given generator 28 on the reference tooth 33 are all well defined as discussed above. Those skilled in the art will understand that the angle $\Delta\varphi_{Zg}$ is greatly exaggerated in Figure 1B for the purposes of illustration only and that in practice, the angle $\Delta\varphi_{Zg}$ is typically relatively small.

e) Simultaneously with the rotation of the pinion rotational axis Zp about the rotational axis $Z_g$ of the conical face gear 12, the theoretical conical involute pinion 30 rotates through an angle $\Delta\varphi_{Zp}$ about the pinion rotational axis Zp, with the magnitude of the angle $\Delta\varphi_{Zp}$ being defined by the relationship defined by equation (6):

$$\frac{\Delta\varphi_{Zp}}{\Delta\varphi_{Zg}} = \frac{N_g}{N_p} = \frac{\Delta s}{\Delta\varphi_{Zg} r_b \cos\psi_b} \tag{6}$$

where Np is the number of teeth on the theoretical conical involute pinion 30 and $N_g$ is the number of teeth on the conical face gear 12. The remaining variables (i.e.. $\Delta s$, $r_b$ and $\psi_b$) will be discussed in detail in step f), below.

f) Simultaneous with steps d) and e), above, the dressing tool 16 is moved three-dimensionally such that the flat surface 60 maintains tangent contact with the surface of the flank 35a of the reference tooth 33 by performing the same angular movement ($\Delta\varphi_{Zg}$) about the rotational axis $Z_g$ of the conical face gear 12 and translates by a distance $\Delta s$ along its own normal $\vec{n}$ with $\Delta s$ being determined through equation (6). Referring back to the relationship defined by equation (6), $r_b$ is the radius of the base cylinder of the pinion 30 and $\psi_b$ is the base helix angle as shown in Figure 3.

g) After the adjustments to the positions of the theoretical conical involute pinion 30 and the dressing tool 16 have been made, the grinding worm 14 and the dressing tool 16 are synchronously moved, such that the grinding worm 14 rotates about its rotational axis $Z_w$ and the dressing tool 16 translates in the direction of the normal $\vec{n}$ of the flat surface 60, with the velocity $v_d$ of the dressing tool 16 being related to the angular velocity $\omega_w$ of the grinding worm 14 by equation (7):

$$v_d = \frac{N_w}{N_p^2} r_b \cos\psi_b \omega_w. \tag{7}$$

The procedure defined by steps a) through g) determines a single path of the dressing tool 16 in forming a single surface of the grinding worm teeth 40. The procedure places the dressing tool at a predetermined initial position and controls the simultaneous movement of the dressing tool 16 and the grinding worm 14.

In practical implementation, it is preferred that the dressing tool 16 start at a point on the determined tool path that is not in contact with the grinding worm 14, move in the manner defined above so as to contact the grinding worm 14 and travel through the entire length of the spiral gap 42 and thereafter be withdrawn from the grinding worm 14. Thereafter, the procedure defined by steps a) through g) is repeated many times, with each iteration of the procedure using a different one of the straight generators 28 on the reference tooth 33, until a first side of the grinding worm teeth 40 is formed. The procedure is then repeated to form the second side of the grinding worm teeth 40. In the particular example provided, approximately forty different straight generators 28 were employed on each side of the reference tooth 33 to define the paths of the dressing tool 16 in forming the grinding worm teeth 40. Those skilled in the art will readily understand, however, that the number of straight generators 28 that are employed to define the paths of the dressing tool 16 can be selected to provide a desired level of accuracy; more straight generators 28 may be employed if a higher degree of accuracy is desired, while fewer straight generators may be employed if a lesser degree of accuracy is required. Those skilled in the art will also understand that the amount of time to fully dress the grinding worm 14 will vary depending on the number of straight generators 28 that are being employed to define the paths of the dressing tool 16.

With reference to Figure 6, a multi-axis CNC (computer numerical control) grinding machine 100 for performing the dressing and grinding methods of the present invention is illustrated. The grinding worm 14 is mounted on a tool spindle 102 and rotates in the direction of arrow C. The tool spindle 102 is mounted to a translating table 104, permitting the rotary axis of the tool spindle 102 to be moved in a desired manner along three linear axes, X, Y and Z, which in the particular example illustrated are oriented in an orthogonal relationship. The conical face gear 12 is mounted on a rotary table 108 and rotates in the direction of arrow A. The dressing tool 16 is mounted to a swing table 112 and is rotatable as shown by arrow B. The location of the tool spindle 102 relative to the rotary table 108 and the dressing tool 16 (in the X, Y and Z directions) is controlled by translating table 104.

Relative positions and movements between the grinding worm 14, the dressing tool 16 and the conical face gear 12 are calculated in the manner discussed above, providing a series of coordinates and paths that are employed to generate a NC (numerical control) program to control the movements of the tool spindle 102, the translating table 104, the rotary table 108 and the swing table 112. Execution of the NC program will then dress the grinding worm 14 and grind the conical face gear 12 in the manner described above. Accordingly, with the dressing and grinding methods of the present invention, the process of converting into machine coordinates and generating NC programs may be accomplished with commercially available CAM (computer-aided-manufacturing) software packages and NC post-processors customized for the design configuration of the grinding and dressing machine that is used.

While the invention has been described in the specification and illustrated in the drawings with reference to a preferred embodiment, it will be understood by those skilled in the art that various changes may be made and equivalents may be substituted for elements thereof without departing from the scope of the invention as defined in the claims. In addition, many modifications may be made to adapt a particular situation or material to the teachings of the invention without departing from the essential scope thereof. Therefore, it is intended that the invention not be limited to the particular embodiment illustrated by the drawings and described in the specification as the best mode presently contemplated for carrying out this invention, but that the invention will include any embodiments falling within the foregoing description and the appended claims.

**Claims**

1. A method for forming a conical face gear (12) that meshingly engages a conical involute pinion (30), the method comprising the steps of:

   - providing a grinding worm (14);
   - providing a theoretical involute pinion (30) having teeth (24); and
   - determining an initial position of the grinding worm and a feed direction of the grinding worm based on true conjugate action between the conical face gear and the theoretical involute pinion and true conjugate action between the theoretical conical involute pinion and the grinding worm, wherein the step of employing the theoretical conical involute pinion to determine the initial position of the grinding worm and the feed direction of the grinding worm includes the steps of:
   - generating a vector d from a rotational axis Zp of the theoretical conical involute pinion to a rotational axis Zg of the conical face gear, the vector d being perpendicular to the rotational axis Zp and the rotational axis Zg;
   - generating a plane A that is perpendicular to the vector d and passes through the rotational axis Zp;
   - generating a line CC that is perpendicular to the rotational axis Zp and lies on the plane A;

- generating a vector $\vec{t}$ that is attached to a reference tooth on the theoretical conical involute pinion;
- superimposing the theoretical involute pinion and the vector $\vec{t}$ to the conical face gear such that the vector $\vec{t}$ intersects the line CC at a point $F_0$ located at the midpoint of a face width of the conical face gear;
- generating a vector $\vec{F}$ that commences from the point $F_0$ and is parallel to the vector $\vec{t}$, the vector $\vec{F}$ establishing the feed direction of the grinding worm;
- determining a reference pitch diameter of the grinding worm;
- generating a vector $\vec{l}$, the vector $\vec{l}$ lying in the plane A and extending from the point $F_0$, the vector $\vec{l}$ being perpendicular to the vector $\vec{F}$ and having a length with an absolute value equaling one-half of the reference pitch diameter;
- determining a lead angle $\lambda_w$ of the grinding worm;
- determining a helix angle $\Psi_w$ by which to skew the rotational axis Zw from the vector $\vec{F}$, the helix angle $\Psi_w$ being equal to the difference between 90° and the lead angle $\lambda_w$; and
- positioning the grinding worm such that a rotational axis Zw of the grinding worm is spaced apart from the point $F_0$ by vector $\vec{l}$ and the rotational axis Zw is skewed from the feed direction by an amount related to a skew angle $\Psi_p$, related to the orientation of the teeth of the theoretical involute pinion.

2. The method of claim 1, further comprising the steps of:

- synchronously rotating the grinding worm (14) and the conical face gear (12); and
- feeding the grinding worm in a feed direction defined by the vector $\vec{F}$.

3. The method of claim 1 or 2, wherein the conical face gear (12) has first quantity Ng of face gear teeth (20) and is rotated with a rotational velocity of ωg, the grinding worm (14) has a second quantity Nw of grinding worm threads and is rotated with a rotational velocity of ωw and the rotational velocities ωg and ωw are related by the equation:

$$\frac{\omega_g}{\omega_w} = \frac{N_w}{N_g}.$$

4. The method of claim 3, wherein the grinding worm (14) is defined by a single spiral gap (42).

5. The method of claim 1 or 2, wherein a magnitude by which the grinding worm (14) is moved in the feed direction is controlled to form a plurality of face gear teeth (20) to a predetermined degree of accuracy.

6. A method for dressing a grinding worm (14) for forming a conical face gear (12) having a plurality of face gear teeth (20), the method comprising the steps of:

- providing a dressing tool (16) having a flat dressing surface;
- providing a theoretical conical involute pinion (30) having a plurality of pinion teeth (24), one of the plurality of pinion teeth being a reference tooth with a pair of tooth flanks (35); and
- employing the conical face gear and the theoretical conical involute pinion to position the flat dressing surface of the dressing tool in tangent contact with a first one of the tooth flanks, which includes the steps of:

  - locating a plurality of straight generators on the first one of the tooth flanks;
  - generating a vector d from a rotational axis Zp of the theoretical conical involute pinion to a rotational axis Zg of the conical face gear, the vector d being perpendicular to the rotational axis Zp and the rotational axis Zg;
  - generating a plane A that is perpendicular to the vector d and passes through the rotational axis Zp;
  - generating a line CC that is perpendicular to the rotational axis Zp and lies on the plane A;
  - generating a vector $\vec{t}$ that is attached to the reference tooth on the theoretical conical involute pinion;
  - superimposing the theoretical involute pinion and the vector $\vec{t}$ to the conical face gear such that the vector $\vec{t}$ intersects the line CC at a point $F_0$ located at the midpoint of a face width of the conical face gear;
  - generating a vector $\vec{F}$ that commences from the point $F_0$ and is parallel to the vector $\vec{t}$; and
  - aligning the flat surface of the dressing tool to a first one of the plurality of straight generators such that a vector $\vec{n}$ in the normal direction of the flat surface is aligned with the normal of the reference tooth at the first one of the straight generators;

- rotating the theoretical conical involute pinion about a rotational axis of the conical face gear while the conical face gear is fixed and the teeth of the conical face gear and the teeth of the theoretical conical involute pinion maintain tangent contact, the conical face gear and the theoretical conical involute pinion obeying true relative conjugate action such that the theoretical conical involute pinion also rotates about a pinion rotational axis;
- simultaneously with the rotation of the theoretical conical involute pinion, rotating the dressing tool and translating the dressing tool by a predetermined amount $\Delta s$ in a direction normal to the flat surface of the dressing tool so that the flat surface of the dressing tool remains in tangent contact with the first one of the tooth flanks.

7. The method of claim 6, further comprising the steps of:

- determining a first quantity Nw of grinding worm teeth (40);
- determining a second quantity Np of theoretical conical involute teeth (24);
- determining a base cylinder radius $r_b$;
- determining a base helix angle $\Psi_b$ of the reference tooth;
- determining an angular velocity $\omega_w$ of the grinding worm; and
- synchronously rotating the grinding worm about a grinding worm axis Zw and translating the dressing tool in the direction normal to the flat surface at a predetermined velocity $v_d$, the velocity $V_b$ being calculated from the equation:

$$V_d = \frac{N_w}{N_p} r_b \cos(\psi)\omega_w .$$

8. The method of claim 6, wherein the step of rotating the theoretical conical involute pinion (30) about the rotational axis of the conical face gear includes the step of calculating an angle $\Delta\varphi z_g$ by which the pinion rotational axis rotates about the rotational axis of the conical face gear, the angle $\Delta\varphi z_g$ being obtained from the equation:

$$\vec{n} \bullet \vec{F} = 0 .$$

9. The method of claim 8, wherein the conical face gear (12) has a first quantity Ng of face gear teeth, the theoretical conical involute pinion (30) has a second quantity Np of pinion teeth (24) and the step of rotating the theoretical conical involute pinion about the rotational axis of the conical face gear includes the step of calculating an angle $\Delta\varphi z_p$ by which the theoretical conical involute pinion rotates about the pinion axis, the angle $\Delta\varphi z_p$ being calculated from the equation:

$$\Delta\varphi z_p = \Delta\varphi z_g \frac{N_g}{N_p} .$$

10. The method of claim 9, wherein the step of translating the dressing tool (16) by a predetermined amount $\Delta s$ simultaneously with the rotation of the theoretical conical involute pinion (30) includes the steps of:

- determining a base cylinder radius $r_b$;
- determining a base helix angle $\Psi_b$ of the reference tooth; and
- calculating $\Delta s$ from the equation:

$$\Delta s = \frac{(N_g)(\Delta \varphi z_g)(r_b)(\cos\psi_b)}{N_p} \; .$$

**11.** A precision grinding apparatus comprising:

- a theoretical conical involute pinion having teeth (24) with the orientation of the teeth determined by a skew angle $\Psi_p$ and a half-cone angle $\delta$;
- a conical face gear (12) adapted to meshingly engage a conical involute pinion (30), the conical face gear having a face gear rotational axis;
- a grinding worm having at least one grinding worm thread (41), wherein
- the theoretical conical involute pinion is used for positioning the grinding worm relative to the conical face gear, and for determining an initial position of the grinding worm and a feed direction of the grinding worm that are based on true conjugate action between the conical face gear and the theoretical involute pinion and true conjugate action between the theoretical conical involute pinion and the grinding worm;
- the precision grinding apparatus further comprising a tool spindle (102) for mounting thereon the grinding worm, a translating table (104) for mounting thereon the tool spindle, a rotary table (108) for mounting thereon the conical face gear, a swing table (112) for mounting thereon a dressing tool (16), and a numerical control program to control the movements of the spindle and tables by calculating the relative positions and movement between the grinding worm, the dressing tool, and the conical face gear, according to any of claims 1-10.

**12.** The precision grinding apparatus of claim 11, the dressing tool (16) having a flat surface, the conical face gear (12) and theoretical conical involute pinion (30) being employed to locate the dressing tool to the grinding worm (14) such that the flat surface is in tangent contact with a flank of a reference tooth on the theoretical conical involute pinion, the dressing tool being employed to iteratively form the at least one grinding worm thread.

**Patentansprüche**

**1.** Verfahren zur Formung eines konischen Kronenrads (12), das kämmend in ein Evolventenkegelritzel (30) eingreift, wobei das Verfahren die Schritte umfasst:

- Bereitstellen einer Schleifschnecke (14);
- Bereitstellen eines theoretischen Evolventenkegelritzels (30) mit Zähnen (24); und
- Bestimmen einer Anfangsposition der Schleifschnecke und einer Vorschubrichtung der Schleifschnecke auf Grundlage des genauen Zusammenwirkens zwischen dem konischen Kronenrad und dem theoretischen Evolventenkegelritzel und des genauen Zusammenwirkens zwischen dem theoretischen Evolventenkegelritzel und der Schleifschnecke, wobei der Schritt des Einsetzens des theoretischen Evolventenkegelritzels, um die Anfangsposition der Schleifschnecke und die Vorschubrichtung der Schleifschnecke zu bestimmen, die Schritte beinhaltet:
- Erzeugen eines Vektors d von einer Rotationsachse Zp des theoretischen Evolventenkegelritzels zu einer Rotationsachse Zg des konischen Kronenrads, wobei sich der Vektor d perpendikular zur Rotationsachse Zp und zur Rotationsachse Zg verhält;
- Erzeugen einer Ebene A, die sich perpendikular zum Vektor d verhält und durch die Rotationsachse Zp verläuft;
- Erzeugen einer Strecke CC, die sich perpendikular zur Rotationsachse Zp verhält und auf der Ebene A liegt;
- Erzeugen eines Vektors $\vec{t}$, der an einen Referenzzahn auf dem theoretischen Evolventenkegelritzel gebunden ist;
- Lagern des theoretischen Evolventenkegelritzels und des Vektors $\vec{t}$ über das konische Kronenrad in einer Weise, dass der Vektor $\vec{t}$ die Strecke CC an einem Punkt $F_0$ schneidet, der sich am Mittelpunkt einer Zahnbreite des konischen Kronenrads befindet;
- Erzeugen eines Vektors $\vec{F}$, der vom Punkt $F_0$ aus beginnt und parallel zum Vektor $\vec{F}$ ist, wobei der Vektor $\vec{F}$ die Vorschubrichtung der Schleifschnecke festsetzt;
- Bestimmen eines Teilkreisdurchmessers der Schleifschnecke;
- Erzeugen eines Vektors $\vec{l}$, wobei der Vektor $\vec{l}$ in der Ebene A liegt und sich vom Punkt $F_0$ aus erstreckt, wobei sich der Vektor $\vec{l}$ perpendikular zum Vektor $\vec{F}$ verhält und eine Länge mit einem Absolutwert aufweist, der gleich der Hälfte des Teilkreisdurchmessers ist;

- Bestimmen eines Steigungswinkels $\lambda_w$ der Schleifschnecke;
- Bestimmen eines Schrägungswinkels $\Psi_w$, um den die Rotationsachse Zw vom Vektor $\vec{F}$ wegzuschrägen ist, wobei der Schrägungswinkel $\Psi_w$ gleich der Differenz zwischen 90˚ und dem Steigungswinkel $\lambda_w$ ist; und
- Positionieren der Schleifschnecke so, dass eine Rotationsachse Zw der Schleifschnecke vom Punkt $F_0$ um den Vektor $\vec{t}$ beabstandet ist und die Rotationsachse Zw von der Vorschubrichtung um einen Betrag weggeschrägt ist, der zu einem schiefen Winkel $\Psi_p$ in Bezug steht, der zur Ausrichtung der Zähne des theoretischen Evolventenkegelritzels in Bezug steht.

2. Verfahren nach Anspruch 1, weiterhin umfassend die Schritte:

   - synchrones Drehen der Schleifschnecke (14) und des konischen Kronenrads (12); und
   - Vorschub der Schleifschnecke in einer durch den Vektor $\vec{F}$ festgelegten Vorschubrichtung.

3. Verfahren nach Anspruch 1 oder 2, wobei das konische Kronenrad (12) eine erste Anzahl Ng an Kronenradzähnen (20) aufweist und mit einer Rotationsgeschwindigkeit $\omega g$ gedreht wird, die Schleifschnecke (14) eine zweite Anzahl Nw an Schleifschneckengewinden aufweist und mit einer Rotationsgeschwindigkeit $\omega w$ gedreht wird und die Rotationsgeschwindigkeiten $\omega g$ und $\omega w$ in Bezug gesetzt sind durch die Gleichung:

$$\frac{\omega_g}{\omega_w} = \frac{N_w}{N_g}$$

4. Verfahren nach Anspruch 3, wobei die Schleifschnecke (14) durch einen einzigen Spiralspalt (42) definiert ist.

5. Verfahren nach Anspruch 1 oder 2, wobei eine Größe, um welche die Schleifschnecke (14) in der Vorschubrichtung bewegt wird, gesteuert wird, um eine Mehrzahl von Kronenradzähnen (20) mit einem vorgegebenen Grad an Akkuratesse zu formen.

6. Verfahren zum Abrichten einer Schleifschnecke (14) zur Formung eines konischen Kronenrads (12) mit einer Mehrzahl von Kronenradzähnen (20), wobei das Verfahren die Schritte umfasst:

   - Bereitstellen eines Abrichtwerkzeugs (16) mit einer ebenen Abrichtfläche;
   - Bereitstellen eines theoretischen Evolventenkegelritzels (30) mit einer Mehrzahl von Ritzelzähnen (24), wobei einer aus der Mehrzahl von Ritzelzähnen ein Referenzzahn mit einem Paar Zahnflanken (35) ist; und
   - Einsetzen des konischen Kronenrads und des theoretischen Evolventenkegelritzels, um die ebene Abrichtfläche des Abrichtwerkzeugs in tangentialen Kontakt mit einer ersten der Zahnflanken zu bringen, beinhaltet den Schritt:

     - Anordnen einer Mehrzahl gerader Erzeuger auf der ersten der Zahnflanken;
     - Erzeugen eines Vektors d von einer Rotationsachse Zp des theoretischen Evolventenkegelritzels zu einer Rotationsachse Zg des konischen Kronenrads, wobei sich der Vektor d perpendikular zur Rotationsachse Zp und zur Rotationsachse Zg verhält;
     - Erzeugen einer Ebene A, die sich perpendikular zum Vektor d verhält und durch die Rotationsachse Zp verläuft;
     - Erzeugen einer Strecke CC, die sich perpendikular zur Rotationsachse Zp verhält und auf der Ebene A liegt;
     - Erzeugen eines Vektors $\vec{t}$, der an den Referenzzahn auf dem theoretischen Evolventenkegelritzel gebunden ist;
     - Lagern des theoretischen Evolventenkegelritzels und des Vektors $\vec{t}$ über das konische Kronenrad in einer Weise, dass der Vektor $\vec{t}$ die Strecke CC an einem Punkt $F_0$ schneidet, der sich am Mittelpunkt einer Zahnbreite des konischen Kronenrads befindet;
     - Erzeugen eines Vektors $\vec{F}$, der vom Punkt $F_0$ aus beginnt und parallel zum Vektor $\vec{t}$ ist; und
     - Ausrichten der ebenen Fläche des Abrichtwerkzeugs nach einem ersten aus der Mehrzahl gerader Erzeuger in einer Weise, dass ein Vektor $\vec{n}$ in der Normalenrichtung der ebenen Fläche nach der Normalen des Referenzzahns am ersten der geraden Erzeuger ausgerichtet ist;

- Drehen des theoretischen Evolventenkegelritzels um eine Rotationsachse des konischen Kronenrads, während das konische Kronenrad feststehend ist und die Zähne des konischen Kronenrads und die Zähne des theoretischen Evolventenkegelritzels tangentialen Kontakt halten, wobei das konische Kronenrad und das theoretische Evolventenkegelritzel genauem relativen Zusammenwirken so gehorchen, dass sich das theoretische Evolventenkegelritzel weiterhin um eine Ritzelrotationsachse dreht;
- gleichzeitig mit der Rotation des theoretischen Evolventenkegelritzels, Drehen des Abrichtwerkzeugs und translatorisches Bewegen des Abrichtwerkzeugs um einen vorgegebenen Betrag $\Delta s$ in einer zur ebenen Fläche des Abrichtwerkzeugs normalen Richtung, so dass die ebene Fläche des Abrichtwerkzeugs in tangentialem Kontakt mit der ersten der Zahnflanken bleibt.

7. Verfahren nach Anspruch 6, weiterhin umfassend die Schritte:

- Bestimmen einer ersten Anzahl Nw an Schleifschneckenzähnen (40);
- Bestimmen einer zweiten Anzahl Np an theoretischen Evolventenkegelritzelzähnen (24);
- Bestimmen eines Grundzylinderradius $r_b$;
- Bestimmen eines Grundschrägungswinkels $\Psi_b$ des Referenzzahns;
- Bestimmen einer Winkelgeschwindigkeit $\omega_w$ der Schleifschnecke; und
- synchrones Drehen der Schleifschnecke um eine Schleifschneckenachse Zw und translatorisches Bewegen des Abrichtwerkzeugs in der zur ebenen Fläche normalen Richtung mit einer vorgegebenen Geschwindigkeit $V_d$, wobei die Geschwindigkeit $V_d$ berechnet wird aus der Gleichung:

$$V_d = \frac{N_w}{N_p} r_b \cos(\psi)\omega_w$$

8. Verfahren nach Anspruch 6, wobei der Schritt des Drehens des theoretischen Evolventenkegelritzels (30) um die Rotationsachse des konischen Kronenrads den Schritt des Berechnens eines Winkels $\Delta\varphi z_g$ beinhaltet, um den sich die Ritzelrotationsachse um die Rotationsachse des konischen Kronenrads dreht, wobei der Winkel $\Delta\varphi z_g$ erhalten wird aus der Gleichung:

$$\vec{n} \bullet \bar{\bar{F}} = 0$$

9. Verfahren nach Anspruch 8, wobei das konische Kronenrad (12) eine erste Anzahl Ng an Kronenradzähnen aufweist, das theoretische Evolventenkegelritzel (30) eine zweite Anzahl Np an Ritzelzähnen (24) aufweist und der Schritt des Drehens des theoretischen Evolventenkegelritzels um die Rotationsachse des konischen Kronenrads den Schritt des Berechnens eines Winkels $\Delta\varphi z_p$ beinhaltet, um den sich das theoretische Evolventenkegelritzel um die Ritzelachse dreht, wobei der Winkel $\Delta\varphi z_p$ berechnet wird aus der Gleichung:

$$\Delta\varphi z_p = \Delta\varphi z_g \frac{N_g}{N_p}$$

10. Verfahren nach Anspruch 9, wobei der Schritt des translatorischen Bewegens des Abrichtwerkzeugs (16) um einen vorgegebenen Betrag $\Delta s$ gleichzeitig mit der Rotation des theoretischen Evolventenkegelritzels (30) die Schritte beinhaltet:

- Bestimmen eines Grundzylinderradius $r_b$;
- Bestimmen eines Grundschrägungswinkels $\Psi_b$ des Referenzzahns; und
- Berechnen von $\Delta s$ aus der Gleichung:

$$\Delta s = \frac{(N_g)(\Delta \varphi_g)(r_b)(\cos \psi_b)}{N_p}$$

**11.** Präzisionsschleifvorrichtung, umfassend:

- ein theoretisches Evolventenkegelritzel mit Zähnen (24), wobei die Ausrichtung der Zähne durch einen schiefen Winkel $\Psi_p$ und einen Halbkegelwinkel $\delta$ festgelegt ist;
- ein konisches Kronenrad (12), das angepasst ist, um kämmend in ein Evolventenkegelritzel (30) einzugreifen, wobei das konische Kronenrad eine Kronenrad-Rotationsachse aufweist;
- eine Schleifschnecke mit zumindest einem Schleifschneckengewinde (41); wobei
- das theoretische Evolventenkegelritzel zum Positionieren der Schleifschnecke in Bezug auf das konische Kronenrad, und zum Bestimmen einer Anfangsposition der Schleifschnecke und einer Vorschubrichtung der Schleifschnecke, die auf dem genauen Zusammenwirken zwischen dem konischen Kronenrad und dem theoretischen Evolventenkegelritzel und dem genauen Zusammenwirken zwischen dem theoretischen Evolventenkegelritzel und der Schleifschnecke beruhen;
- die Präzisionsschleifvorrichtung weiterhin umfassend eine Werkzeugspindel (102) zum Anbringen der Schleifschnecke darauf, einen Translationstisch (104) zum Anbringen der Werkzeugspindel darauf, einen Drehtisch (108) zum Anbringen des konischen Kronenrads darauf, einen Schwenktisch (112) zum Anbringen eines Abrichtwerkzeugs (16) darauf und ein Programm zur numerischen Steuerung, um die Bewegungen der Spindel und Tische zu steuern durch Berechnen der relativen Positionen und Bewegung zwischen der Schleifschnecke, dem Abrichtwerkzeug und dem konischen Kronenrad, nach einem der Ansprüche 1 - 10.

**12.** Präzisionsschleifvorrichtung nach Anspruch 11, wobei das Abrichtwerkzeug (16) eine ebene Fläche aufweist, wobei das konische Kronenrad (12) und das theoretische Evolventenkegelritzel (30) eingesetzt werden, um das Abrichtwerkzeug an der Schleifschnecke (14) so anzuordnen, dass sich die ebene Fläche in tangentialem Kontakt mit einer Flanke eines Referenzzahns auf dem theoretischen Evolventenkegelritzel befindet, wobei das Abrichtwerkzeug genutzt wird, um das zumindest eine Schleifschneckengewinde iterativ zu formen.

## Revendications

**1.** Procédé de réalisation d'un engrenage conique plat (12) venant s'engrener avec un pignon conique à développante (30), le procédé comprenant les étapes consistant à :

- fournir une vis sans fin de meulage (14) ;
- fournir un pignon théorique à développante (30) possédant des dents (24) ; et
- déterminer une position initiale de la vis sans fin de meulage et une direction d'avancée de la vis sans fin de meulage en se fondant sur l'action conjuguée réelle entre l'engrenage conique plat et le pignon théorique à développante et l'action conjuguée réelle entre le pignon conique théorique à développante et la vis sans fin de meulage, dans lequel l'étape consistant à employer le pignon conique théorique à développante pour déterminer la position initiale de la vis sans fin de meulage et la direction d'avancée de la vis sans fin de meulage comprend les étapes consistant à :
- générer un vecteur d partant d'un axe de rotation Zp du pignon conique théorique à développante et allant vers un axe de rotation Zg de l'engrenage conique plat, le vecteur d étant perpendiculaire à l'axe de rotation Zp et à l'axe de rotation Zg ;
- générer un plan A qui est perpendiculaire au vecteur d et traverse l'axe de rotation Zp ;
- générer une ligne CC qui est perpendiculaire à l'axe de rotation Zp et qui repose sur le plan A ;

- générer un vecteur $\vec{t}$ qui est rattaché à une dent de référence du pignon conique théorique à développante ;
- superposer le pignon théorique à développante et le vecteur $\vec{t}$ sur l'engrenage conique plat de sorte que le vecteur $\vec{t}$ vienne croiser la ligne CC en un point $F_0$ situé au point médian d'une largeur de denture de l'engrenage conique plat ;
- générer un vecteur $\vec{F}$ qui débute au point $F_0$ et est parallèle au vecteur $\vec{t}$, le vecteur $\vec{F}$ établissant la direction d'avancée de la vis sans fin de meulage ;
- déterminer un diamètre primitif de référence de la vis sans fin de meulage ;
- générer un vecteur $\vec{l}$, le vecteur $\vec{l}$ étant situé dans le plan A en se prolongeant à partir du point $F_0$, le vecteur $\vec{l}$ étant perpendiculaire au vecteur $\vec{F}$ et ayant une longueur dont la valeur absolue est égale à la moitié du diamètre primitif de référence ;
- déterminer un angle d'avance $\lambda_W$ de la vis sans fin de meulage ;
- déterminer un angle d'hélice $\Psi_w$ représentant la mesure de l'inclinaison de l'axe de rotation Zw par rapport au vecteur $\vec{F}$, l'angle d'hélice $\Psi_w$ étant égal à la différence entre 90˚ et l'angle d'avance $\lambda_W$ ; et
- placer la vis sans fin de meulage de telle manière qu'un axe de rotation Zw de la vis sans fin de meulage est écarté du point $F_0$ selon le vecteur $\vec{l}$ et l'axe de rotation Zw est incliné par rapport à la direction d'avancée selon une quantité liée à l'angle d'inclinaison $\Psi_w$, en relation avec l'orientation des dents du pignon théorique à développante.

2. Procédé selon la revendication 1, comprenant en outre les étapes consistant à :

   - faire tourner en synchronisme la vis sans fin de meulage (14) et l'engrenage conique plat (12) ; et
   - faire avancer la vis sans fin de meulage dans une direction d'avancée définie par le vecteur $\vec{F}$.

3. Procédé selon la revendication 1 ou 2, dans lequel l'engrenage conique plat (12) possède une première quantité Ng de dents d'engrenage (20) et subit une rotation à une vitesse de rotation ωg, la vis sans fin de meulage (14) possède une seconde quantité Nw de filets de vis sans fin de meulage et subit une rotation à une vitesse de rotation ωw, et les vitesses de rotation ωg et ωw sont liées par l'équation :

$$\frac{\omega_g}{\omega_w} = \frac{N_w}{N_g}$$

4. Procédé selon la revendication 3, dans lequel la vis sans fin de meulage (14) est définie par un seul espace hélicoïdal (42).

5. Procédé selon la revendication 1 ou 2, dans lequel l'importance avec laquelle la vis sans fin de meulage (14) subit un déplacement dans la direction d'avancée est commandée pour former une pluralité de dents d'engrenage (20) avec un degré d'exactitude prédéterminé.

6. Procédé de dressage d'une vis sans fin de meulage (14) pour former un engrenage conique plat (12) possédant une pluralité de dents d'engrenage (20), le procédé comprenant les étapes consistant à :

   - fournir un outil de dressage (16) possédant une surface de dressage plane ;
   - fournir un pignon conique théorique à développante (30) possédant une pluralité de dents de pignon (24), une des dents de la pluralité de dents de pignon étant une dent de référence possédant une paire de flancs de dent (35) ; et
   - employer l'engrenage conique plat et le pignon conique théorique à développante pour placer la surface de dressage plane de l'outil de dressage en contact tangentiel avec un premier flanc parmi les flancs de dent, ce qui comprend l'étape consistant à :

      - situer une pluralité de génératrices droites sur le premier des flancs de dent ;
      - générer un vecteur d partant d'un axe de rotation Zp du pignon conique théorique à développante et allant vers un axe de rotation Zg de l'engrenage conique plat, le vecteur d étant perpendiculaire à l'axe de rotation Zp et l'axe de rotation Zg ;

- générer un plan A qui est perpendiculaire au vecteur d et qui traverse l'axe de rotation Zp ;
- générer une ligne CC qui est perpendiculaire à l'axe de rotation Zp et qui repose sur le plan A ;
- générer un vecteur $\vec{t}$ qui est rattaché à la dent de référence du pignon conique théorique à développante ;
- superposer le pignon théorique à développante et le vecteur $\vec{t}$ sur l'engrenage conique plat de sorte que le vecteur $\vec{t}$ vienne croiser la ligne CC en un point $F_0$ situé au point médian d'une largeur de denture de l'engrenage conique plat ;
- générer un vecteur $\vec{F}$ qui débute au point $F_0$ et est parallèle au vecteur $\vec{t}$ ; et
- aligner la surface plane de l'outil de dressage à une première génératrice parmi la pluralité de génératrices droites de sorte qu'un vecteur $\vec{n}$ dans la direction normale de la surface plane soit aligné avec la normale de la dent de référence au niveau de la première des génératrices droites ;

- faire tourner le pignon conique théorique à développante sur un axe de rotation de l'engrenage conique plat tandis que l'engrenage conique plat est fixe et les dents de l'engrenage conique plat et les dents du pignon conique théorique à développante maintiennent un contact tangentiel, l'engrenage conique plat et le pignon conique théorique à développante obéissant à une action conjuguée relative réelle de sorte que le pignon conique théorique à développante subit également une rotation autour d'un axe de rotation du pignon ;
- simultanément à la rotation du pignon conique théorique à développante, faire tourner l'outil de dressage et translater l'outil de dressage selon une quantité prédéterminée Δs dans une direction normale à la surface plane de l'outil de dressage de sorte que la surface plane de l'outil de dressage demeure en contact tangentiel avec le premier des flancs de dent.

**7.** Procédé selon la revendication 6, comprenant en outre les étapes consistant à :

- déterminer une première quantité Nw de dents de vis sans fin de meulage (40) ;
- déterminer une seconde quantité Np de dents (24) du pignon conique théorique à développante ;
- déterminer un rayon du cylindre de base $r_b$ ;
- déterminer un angle d'hélice de base $\Psi_b$ de la dent de référence ;
- déterminer une vitesse angulaire $\omega_w$ de la vis sans fin de meulage ; et
- en synchronisme, faire tourner la vis sans fin de meulage sur un axe de vis sans fin de meulage Zw et translater l'outil de dressage dans la direction normale à la surface plane à une vitesse prédéterminée $V_d$, la vitesse $V_d$ étant calculée à partir de l'équation :

$$V_d = \frac{N_w}{N_p} r_b \cos(\psi)\omega_w$$

**8.** Procédé selon la revendication 6, dans lequel l'étape consistant à faire tourner le pignon conique théorique à développante (30) sur l'axe de rotation de l'engrenage conique plat comprend l'étape consistant à calculer un angle $\Delta\varphi z_g$ selon lequel l'axe de rotation du pignon tourne sur l'axe de rotation de l'engrenage conique plat, l'angle $\Delta\varphi z_g$ résultant de l'équation :

$$\vec{n} \bullet \vec{\vec{F}} = 0$$

**9.** Procédé selon la revendication 8, dans lequel l'engrenage conique plat (12) possède une première quantité Ng de dents d'engrenage, le pignon conique théorique à développante (30) possède une seconde quantité Np de dents de pignon (24) et l'étape consistant à faire tourner le pignon conique théorique à développante sur l'axe de rotation de l'engrenage conique plat comprend l'étape consistant à calculer un angle $\Delta\varphi z_p$ selon lequel le pignon conique théorique à développante tourne sur l'axe du pignon, l'angle $\Delta\varphi z_p$ étant calculé à partir de l'équation :

$$\Delta\varphi_p = \Delta\varphi_s \frac{N_s}{N_p}$$

**10.** Procédé selon la revendication 9, dans lequel l'étape consistant à translater l'outil de dressage (16) selon une quantité prédéterminée Δs simultanément à la rotation du pignon conique théorique à développante (30) comprend les étapes consistant à :

- déterminer un rayon du cylindre de base rb ;
- déterminer un angle d'hélice de base Ψb de la dent de référence ; et
- calculer Δs à partir de l'équation :

$$\Delta s = \frac{(N_s)(\Delta\varphi_s)(r_b)(\cos\psi_b)}{N_p}$$

**11.** Appareil de meulage de précision comprenant :

- un pignon conique théorique à développante possédant des dents (24), l'orientation des dents étant déterminée par un angle d'inclinaison $\Psi_p$ et un demi-angle au sommet du cône δ ;
- un engrenage conique plat (12) adapté pour s'engrener avec un pignon conique à développante (30), l'engrenage conique plat possédant un axe de rotation ;
- une vis sans fin de meulage possédant au moins un filet de vis sans fin de meulage (41) ; dans lequel
- le pignon conique théorique à développante permet de placer la vis sans fin de meulage par rapport à l'engrenage conique plat, et de déterminer une position initiale de la vis sans fin de meulage et une vitesse d'avancée de la vis sans fin de meulage en se fondant sur l'action conjuguée réelle entre l'engrenage conique plat et le pignon théorique à développante et l'action conjuguée réelle entre le pignon conique théorique à développante et la vis sans fin de meulage ;
- l'appareil de meulage de précision comprenant en outre un broche à outil (102) sur laquelle doit être montée la vis sans fin de meulage, une table de translation (104) sur laquelle doit être montée la broche à outil, une table tournante (108) sur laquelle doit être monté l'engrenage conique plat, une table oscillante (112) sur laquelle doit être monté un outil de dressage (16), et un programme de commande numérique destiné à commander les mouvements de la broche et des tables en calculant les positions relatives et le mouvement entre la vis sans fin de meulage, l'outil de dressage et l'engrenage conique plat, selon l'une quelconque des revendications 1 à 10.

**12.** Appareil de meulage de précision selon la revendication 11, l'outil de dressage (16) possédant une surface plane, l'engrenage conique plat (12) et le pignon conique théorique à développante (30) étant employés pour placer l'outil de dressage par rapport à la vis sans fin de meulage (14) de sorte que la surface plane soit en contact tangentiel avec un flanc d'une dent de référence du pignon conique théorique à développante, l'outil de dressage étant employé pour former de manière itérative l'au moins un filet de la vis sans fin de meulage.

*Fig-1A*

*Fig-1B*

Fig-2A

Fig-2B

*Fig-2C*

*Fig-4*

*Fig-5A*

$$\underline{Fig\text{-}3}$$

_Fig-5B_

_Fig-6_

21

**REFERENCES CITED IN THE DESCRIPTION**

**Patent documents cited in the description**

- US 5494475 A

- US 5941124 A